# EUROPEAN PATENT SPECIFICATION

(11) **EP 3 499 962 B1**
(45) Date of publication and mention of the grant of the patent: **07.07.2021**
(21) Application number: 17839022.5
(22) Date of filing: 30.05.2017
(51) Int. Cl.: H04W 36/08, H04W 16/26, H04W 40/22

(54) **RELAY DEVICE, MOBILE COMMUNICATION SYSTEM, AND RELAY METHOD**
RELAISVORRICHTUNG, MOBILKOMMUNIKATIONSSYSTEM UND RELAISVERFAHREN
DISPOSITIF RELAIS, SYSTÈME DE COMMUNICATION MOBILE, ET PROCÉDÉ DE RELAIS

(30) Priority: 08.08.2016 JP 2016155529
(43) Date of publication of application: 19.06.2019
(73) Proprietor: Softbank Corp., Tokyo 105-7529 (JP)
(72) Inventor: TAKAGI, Jumpei, Tokyo 105-7317 (JP); NANRI, Masahiko, Tokyo 105-7317 (JP); YOSHIMURA, Takayuki, Tokyo 105-7317 (JP); NOMACHI, Masanori, Tokyo 105-7317 (JP); TAKII, Takanori, Tokyo 105-7317 (JP)
(74) Representative: Würmser, Julian
(86) International application number: PCT/JP2017/020115
(87) International publication number: WO 2018/029947

(56) References cited:
- WO-A1-2012/165411
- JP-A- 2003 333 670
- JP-A- 2008 271 064
- JP-A- 2012 249 132
- US-A1- 2007 086 388
- US-A1- 2011 134 887
- US-A1- 2013 244 569
- "3rd Generation Partnership Project; Technical Specification Group Radio Access Network; Evolved Universal Terrestrial Radio Access (E-UTRA); Radio Resource Control (RRC); Protocol specification (Release 13)", 3GPP STANDARD; 3GPP TS 36.331, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V13.2.0, 11 July 2016 (2016-07-11), pages 1-623, XP051123115, [retrieved on 2016-07-11]

## Description

### TECHNICAL FIELD

The present invention relates to a relay apparatus, mobile communications system, and relay method for relaying communication between a terminal device and a macro cell base station.

### BACKGROUND ART

Communication standards concerning mobile communications terminals include the third-generation mobile phone (3G) standards and the LTE (Long Term Evolution) standards. There is provided a radio communications system that connects a macro cell base station(s) and a mobile communications terminal(s) (terminal device(s)) via radio communication in accordance with these standards. Relay apparatuses are used to improve coverage when the terminal device(s) is used indoors. Regarding the relay apparatuses, there are: a device(s) in charge of access (AC: Access Link) radio, which is radio communication with the terminal devices; and a device(s) in charge of backhaul (BH: Backhaul Link) radio, which is radio communication with the macro cell base station(s). Technology to handle such relay apparatuses are proposed by various patent literature (see PTL 1 to PTL 3).

### CITATION LIST

### PATENT LITERATURE

PTL 1: Japanese Patent Application Laid-Open (Kokai) Publication No. 2014-132757
PTL 2: Japanese Patent Application Laid-Open (Kokai) Publication No. 2014-90300
PTL 3: Japanese Patent Application Laid-Open (Kokai) Publication No. 2014-30186

US patent application publication 2011/134887 A1 aims to disclose an apparatus and a method for handover in a broadband wireless communication system supporting a Mobile Relay Station (MRS). The method includes transmitting a Connection ID (CID) of Mobile Stations (MSs), the CIDs pre-allocated by a target BS, to the MSs; sending a resource allocation message comprising uplink resource allocation information for bandwidth request of the MSs, to the MSs; receiving a bandwidth request message which comprises security authentication information of each MS, from the MSs using an uplink resource allocated through the uplink resource allocation information; and aggregating bandwidth request messages of the MSs and sending a ranging request message comprising the security authentication information and bandwidth request information of the MSs to the target BS.

US patent application publication 2013/244569 A1 aims to disclose a systems and a method for transparent handovers of mobile relays on high-speed vehicles. A base station of a wireless communications network transmits identification data to a mobile relay on a high-speed vehicle. The identification data identifies base stations which are configured for transparent handovers. The network also receives data indicative of a scheduled path of the high-speed vehicle, which it uses to select a target base station for communication with the mobile relay. Once the target base station has been selected, the network begins servicing the mobile relay from the second base station, without requiring any measurement values from the mobile relay and without handover signaling.

US patent application publication 2007/086388 A1 aims to disclose an apparatus and a method for supporting an MS-initiated handover in a multi-hop relay BWA communication system. The MS determines whether a handover is required by measuring the strengths of signals received from neighbor BSs and neighbor RSs. If a handover is required, the MS sends to a serving station a handover request message including MS-recommended target neighbor node list information, and receives from the serving station a handover response message including serving station-recommended target neighbor node list information.

### ARTICLES

*"*3rd Generation Partnership Project; Technical Specification Group Radio Access Network; Evolved Universal Terrestrial Radio Access (E-UTRA); Radio Resource Control (RRC); Protocol specification (Release 13)", vol. RAN WG2, no. V13.2.0, 11 July 2016 (2016-07-11), pages 1-623 aims to disclose a technical specification for a radio resource control protocol for a radio interface between a UE and an E-UTRAN as well as for a radio interface between an RN and an E-UTRAN. Section 5.3.5 relates to RRC connection reconfiguration wherein the UE is unable to comply with (part of) a configuration included in an RRCConnectionReconfiguration message.

### SUMMARY OF THE INVENTION

### TECHNICAL PROBLEM

Meanwhile, the macro cell base station judges communication quality and communication traffic volume, etc., on the basis of a measurement report from the relay apparatus. If the quality of communication with the relay apparatus degrades or the communication traffic volume increases, an instruction is designed to be issued to the relevant relay apparatus to switch connection (or execute handover) to another adjacent macro cell base station.

When the relay apparatus switches a connection point, it is necessary to re-establish a connection between a new macro cell base station and the relay apparatus. Particularly, when the communication quality at the respective macro cell base stations is nearly equal before and after switching of the connection, each macro cell base station repeats issuing the connection switching instruction, so that the handover occurs frequently. For example, this is the case where immediately after the connection is switched from a first macro cell base station to a second macro cell base station, the connection is switched again from the second macro cell base station to the first macro cell base station. When the handover is repeated, time to establish new communication is required and communication data is consumed to establish communication for a purpose other than transferring content, thereby causing degradation of the communication quality. Should it degrade further, if IP packets which have been established once to ensure security are eliminated, access radio communication between the relay apparatus and the terminal device will be blocked for several seconds until the communication is re-established.

The present invention was devised in light of the above-described circumstances and it is an object of the invention to provide a relay apparatus, mobile communications system, and relay method capable of suppressing the frequency of the handover which may occur between macro cell base stations.

### SOLUTION TO PROBLEM

In order to achieve the above-described object, a relay apparatus according to an embodiment is a relay apparatus for relaying communication between a terminal device and a macro cell base station, wherein the relay apparatus is configured to establish a connection to a first macro cell base station on the basis of connection point identification information for identifying a macro cell base station which is a connection point; and when the relay apparatus receives a connection switching request, from the first macro cell base station, to switch the connection from the first macro cell base station to another macro cell base station, the relay apparatus is configured to ignore the connection switching request, and when specific priority information is included in the received connection switching request, the relay apparatus is configured to switch the connection to the another macro cell base station corresponding to the specific priority information; and wherein the specific priority information designates a forced handover to the another macro cell base station.

Furthermore, a mobile communications system according to an embodiment includes: a relay apparatus for relaying communication between a terminal device and a macro cell base station; wherein the relay apparatus is configured to establish a connection to a first macro cell base station on the basis of connection point identification information for identifying a macro cell base station which is a connection point; and when the relay apparatus receives a connection switching request, from the first macro cell base station, to switch the connection from the first macro cell base station to another macro cell base station, the relay apparatus is configured to ignore the connection switching request, and when specific priority information is included in the received connection switching request, the relay apparatus is configured to switch the connection to the another macro cell base station corresponding to the specific priority information; and wherein the specific priority information designates a forced handover to the another macro cell base station.
Furthermore, a relay method according to an embodiment is a relay method for relaying communication between a terminal device and a macro cell base station, wherein the relay method includes: a step of establishing a connection to a first macro cell base station on the basis of connection point identification information for identifying a macro cell base station which is a connection point; and a step, when receiving a connection switching request, from the first macro cell base station, to switch the connection from the first macro cell base station to another macro cell base station, of ignoring the connection switching request, and when specific priority information is included in the received connection switching request, of switching the connection to the another macro cell base station corresponding to the specific priority information; and wherein the specific priority information designates a forced handover to the another macro cell base station.

Furthermore, macro cell base station information about a macro cell base station to be connected first may be set so that the information can be changed.

### ADVANTAGEOUS EFFECTS OF THE INVENTION

The relay apparatus, mobile communications system, and relay method according to the present invention can suppress the frequency of the handover which may occur between the macro cell base stations.

### BRIEF DESCRIPTION OF DRAWINGS

[Fig. 1] Fig. 1 is a schematic diagram illustrating the configuration of a mobile communications system according to an embodiment of the present invention;
[Fig. 2] Fig. 2 is a schematic diagram for explaining a second operation of the mobile communications system according to this embodiment;

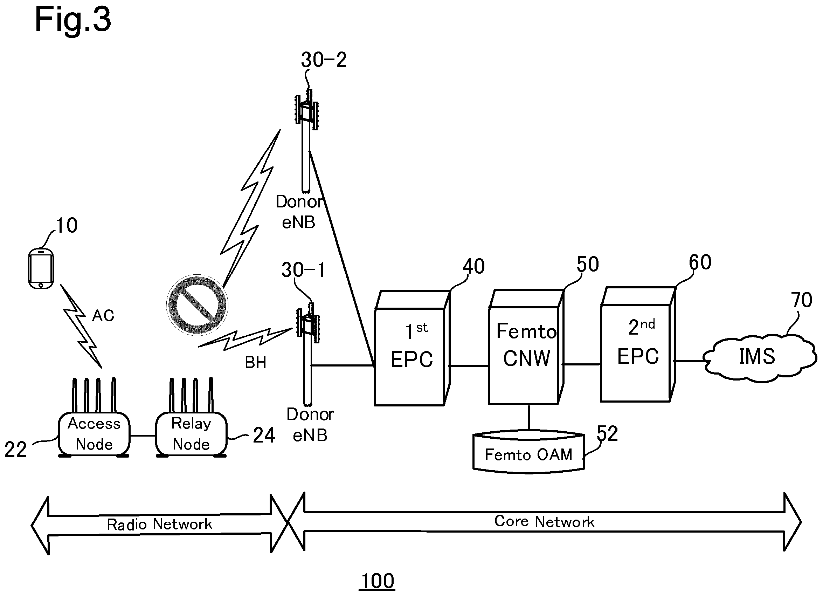

[Fig. 3] Fig. 3 is a schematic diagram illustrating the configuration of a mobile communications system according to another embodiment of the present invention;
[Fig. 4] Fig. 4 is a sequence diagram for explaining a first operation of the mobile communications system;
[Fig. 5] Fig. 5 is a sequence diagram for explaining a second operation of the mobile communications system according to this embodiment; and
[Fig. 6] Fig. 6 is a flowchart for explaining a third operation of the mobile communications system according to an example.

### DESCRIPTION OF EMBODIMENTS

Embodiments of the present invention will be explained with reference to the drawings. Firstly, a system configuration that is common to a plurality of embodiments will be explained and then a first operation to a third operation of the system will be explained.

Incidentally, embodiments explained below are just for illustration and are not intended to exclude applications of various variations or technologies which are not clearly specified below. In other words, the present invention can be implemented in various variations (for example, by combining respective examples) within the range not departing from the gist of the invention. Furthermore, in the following descriptions of the drawings, the same or similar reference numerals are assigned to the same or similar parts. The drawings are schematic and are not necessarily identical to, for example, the actual size or proportions. The drawings may sometimes contain parts whose size relationship or proportions differ between the drawings.

### [System Configuration]

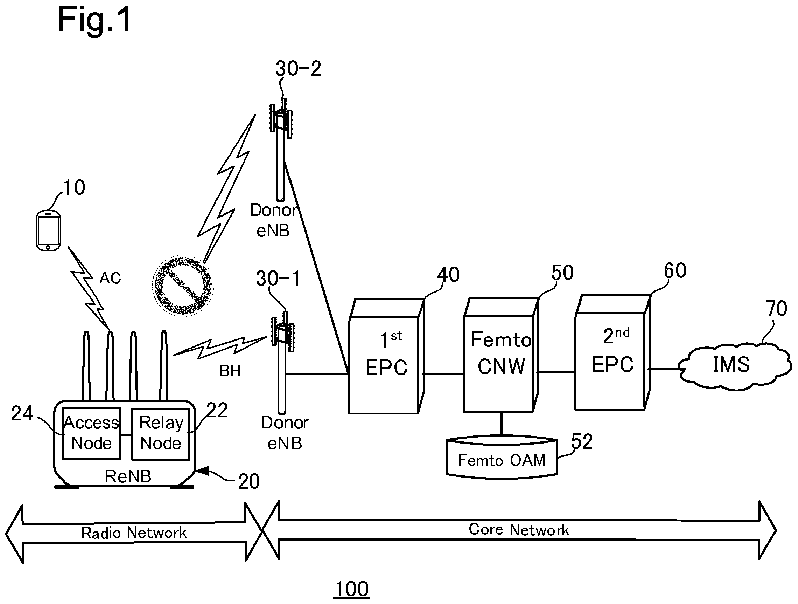

Fig. 1 is a schematic diagram illustrating the configuration of a mobile communications system according to this embodiment. Referring to Fig. 1, a mobile communications system 100 according to this embodiment includes a configuration relating to a radio network and a configuration relating to a core network. They will be explained below.

### (Radio Network)

Referring to Fig. 1, the radio network for the mobile communications system 100 includes a terminal device 10, a relay apparatus 20, and macro cell base stations 30-1, 30-2, and so on (which will be referred to as the "macro cell base stations 30" when the base stations are not specifically distinguished from each other).

The terminal device 10 is a mobile communications terminal such as a smartphone or a cell phone and is also called UE (User Equipment). It is assumed in Fig. 1 that the terminal device 10 exists in a service area within a communication-enabled range of the relay apparatus 20 and also exists in a service area within a communication-enabled range of the macro cell base station 30-2.

The relay apparatus 20 is an apparatus according to the present invention and is also called a ReNB (Regenerative repeater type eNode B), meaning a node for relaying between the macro cell base station 30 and the terminal device 10. The relay apparatus 20 includes a relay node 22 and an access node 24. The relay node 22 and the access node 24 may be configured either as independent separate devices or as an integrated apparatus in which both of their functions are aggregated.

The relay node 22 constitutes one node in the radio network and is a node that establishes backhaul radio communication with the macro cell base station 30. The relay node 22 is also called customer premises equipment CPE (Customer Premises Equipment). The relay node 22 can establish communication with the macro base station 30 by selecting any one of a plurality of frequency bandwidths which are defined as selectable according to the communications standards. The relay node 22 is designed to regularly measure communication quality and a communication traffic volume in surrounding frequency bands and transmit the measurement result as a measurement report to the macro cell base station 30, which is connected via the backhaul radio.

The access node 24 constitutes one node in the radio network and is a node that establishes access radio communication with the terminal device 10. The access node 24 provides the communications terminal 10 with packet communication services (such as voice packet communication services and multimedia services). The cell size formed by the access node 24 is on a smaller scale than that of the macro base station 30 and constructs a communication area with a radius ranging from several meters to several tens of meters. The access node 24 is also called an HeNB (Home eNode B) or Femtocell (FMC: Femto Cell) base station according to the LTE standards.

The macro cell (MCC: Macro Cell) base station 30 is configured to establish the radio communication with the relay node 22 and also directly establish the access radio communication with the terminal device 10. The macro base station 30 constructs a communication area with a radius ranging from several hundreds of meters to tens of kilometers. The macro cell base station 30 is also called a donor base station (Donor eNB); and specifically, it is also called an eNB (eNode B) according to the LTE standards. When the measurement report is transmitted from the relay node 22 for the relay apparatus 20, the macro cell base station 30 judges the communication quality and the communication traffic volume of the backhaul radio communication on the basis of comparison with a specified threshold value; and if the macro cell base station 30 determines that the communication quality has degraded to a certain degree or the communication traffic volume has increased by a specified amount or more, the macro cell base station 30 is designed to transmit a connection switching request to the relay node 22 and issue an instruction to switch the communication to another macro cell base station, that is, to execute handover. Fig. 1 shows that: a macro cell base station 30-1 is a specific macro cell base station with which a connection is established on the basis of the connection point identification information; and the backhaul radio communication is established between the macro cell base station 30-1 and the relay node 22. Then, when the connection switching request for the handover from the macro cell base station 30-1 to a macro cell base station 30-2 is issued, switching of the connection is prohibited.

### (Core Network)

Referring to Fig. 1, the mobile communications system 100 further includes, as a configuration relating to the core network, a first core network EPC (Evolved Packet Core) 40, a femto core network (Femto CNW: Core Network) 50, a second core network EPC 60, and an IP multimedia subsystem IMS (IP Multimedia Subsystem) 70. Incidentally, in this embodiment, the core network will be explained as including the first core network 40, the femto core network 50, and the second core network 60; however, the configuration of the core network is not limited to this example.

The first core network EPC 40 is a network that mainly implements switching packet data networks and security functions, mobility management of the terminal device 10, quality management (QoS: Quality of Service) of the radio communication, and so on. The first core network 40 includes, as various devices for implementing these functions, a signaling gateway SGW (Signaling Gateway), a packet data network gateway PGW (Packet Data Network Gateway), a security gateway SeGW (Security Gateway), a mobility management entity MME (Mobility Management Entity), and a quality control server QCS (Quality Control Server) although they are not illustrated in the drawing.

The femto core network 50 is a network that performs various management relating to the relay apparatus 20. The femto core network 50 is configured so that it is connected to a femto OAM (Operation, Administration, and Maintenance) 52 to execute failure management, quality control, and activation/stop control management relating to the relay apparatus 20.

The second core network EPC 60 is a network for controlling connections of outgoing calls and incoming calls, exchanging information with external networks, exchanging packets, managing accounting, and so on. Although they are not illustrated in the drawing, the second core network 60 includes, as various devices for implementing these functions, a mobile services switching center MSC (Mobile Services Switching Center), a gateway switching node GMSC (Gateway Mobile-services Switching Center), a signaling gateway SGW, a packet data network gateway PGW, a mobility management entity MME, and a communication policy and charging rules management device.

The IP multimedia subsystem IMS 70 is a system for executing communication control via Internet Protocol and is a base system that handles voice calls and multimedia services via VoIP (Voice over Internet Protocol). The IMS 70 is connected to the Internet.

### [System Operations]

### (First Operation)

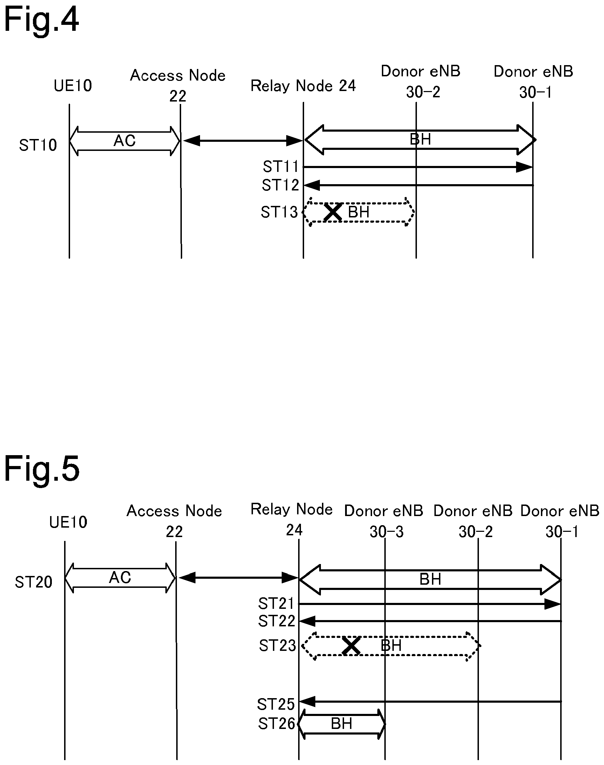

Next, the first operation of the mobile communications system 100 according to this embodiment will be explained with reference to Fig. 1 and Fig. 4. Fig. 4 is a sequence diagram for explaining this first operation.

This first operation relates to an operation executed when, for example, in a connection status as illustrated in Fig. 1, the relay apparatus 20 establishes a connection to the macro cell base station 30-1 on the basis of the connection point identification information and subsequently a connection switch (handover) request is issued to switch the connection to another macro cell base station 30-2.

Firstly, when the terminal device 10 is connected to the access node 24 for the relay apparatus 20, the access radio communication (AC) is executed between the terminal device 10 and the access node 24. Furthermore, the relay node 22 for the relay apparatus 20 establishes a connection to the macro cell base station 30-1 on the basis of the connection point identification information for identifying a macro cell base station which should be a first connection point. As a result, the backhaul radio communication (BH) is established between the relay node 22 and the macro cell base station 30-1 (step ST10).

The relay node 22 regularly measures the communication quality and the communication traffic volume in surrounding frequency bands in this state and regularly transmits the measurement result as a measurement report to the macro cell base station 30-1 with which the backhaul radio communication is established (step ST11).

Under this circumstance, the macro cell base station 30-1 refers to the measurement report transmitted from the relay node 22 and judges the communication quality and the communication traffic volume of the backhaul radio communication (BH) on the basis of comparison with a specified threshold value. Then, when it is determined that the communication quality has degraded to a certain degree or the communication traffic volume has increased by a specified amount or more, a connection switching request for handover to switch the communication to the macro cell base station 30-2 is transmitted to the relay node 22 (step ST12).

However, regarding this first operation, even when the connection switching request to switch the connection from the relevant macro cell base station 30-1 to another macro cell base station 30-2 is received, the relay node 22 for the relay apparatus 20 prohibits switching of the connection to the other macro cell base station 30-2 pursuant to the connection switching request (ST13). Specifically speaking, once the relay node 22 is connected to the specified macro cell base station 30-1, this first operation operates to ignore the connection switching request received thereafter and make the connection to the macro cell base station 30-1 continue.

Therefore, according to the first operation, the relay apparatus 20 (the relay node 22) ignores a normal connection switching request, so that the frequency of the handover which may occur between the macro cell base stations can be suppressed.

### (Second Operation)

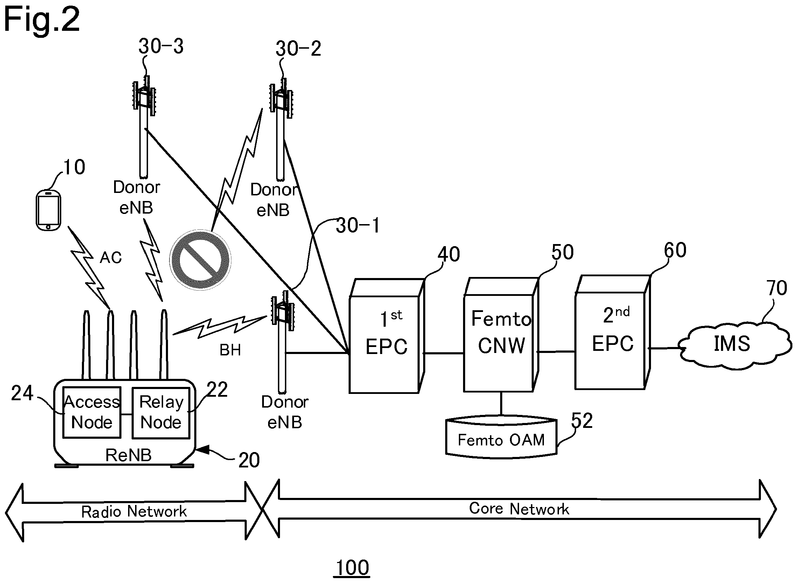

Next, the second operation of the mobile communications system 100 according to this embodiment will be explained with reference to Fig. 2 and Fig. 5. Fig. 2 is a diagram illustrating a connection status of the mobile communications system 100 according to the second operation. Fig. 5 is a sequence diagram for explaining this second operation.

Referring to Fig. 2, the macro cell base station 30-1 is a specific microcell base station with which a connection is established on the basis of the connection point identification information, and a macro cell base station 30-3 is a macro cell base station designated according to specific priority information. This second operation is an operation executed when, for example, in a connection status as illustrated in Fig. 2, the specific macro cell base station 30-3 is included as the priority information to switch the connection even if the relay apparatus 20 establishes the connection to the macro cell base station 30-1 on the basis of the connection point identification information and ignores the normal connection switching request transmitted from the macro cell base station 30-1 just like the aforementioned first operation.

Firstly, when the terminal device 10 is connected to the access node 22 for the relay apparatus 20, the access radio communication (AC) is executed between the terminal device 10 and the access node 22 for the relay apparatus 20. Furthermore, the relay node 22 for the relay apparatus 20 establishes a connection to the macro cell base station 30-1 on the basis of the connection point identification information for identifying a macro cell base station which should be a first connection point. As a result, the backhaul radio communication (BH) is established between the relay node 22 and the macro cell base station 30-1 (step ST20).

Under this circumstance, the relay node 22 regularly transmits the measurement report to the macro cell base station 30-1 as explained in the aforementioned first operation (step ST21). Then, when the macro cell base station 30-1 judges that the communication quality has degraded to a certain degree or the communication traffic volume has increased by a specified amount or more, it transmits the connection switching request for the handover to switch to another macro cell base station 30-2 to the relay node 22 (step ST22). According to the first operation, the relay node 22 ignores this connection switching request in this embodiment (step ST23).

However, there may be a case where due to whatever reason, the necessity to execute the handover to a base station other that the macro cell base station with which the communication is currently established may occur. In such a case, priority information indicating that the connection should be switched preferentially to a specific macro cell base station is included. When the connection switching request for the handover along with such priority information is transmitted, the relay apparatus is configured to comply with this request.

For example, if any special reason exists to cause the relay apparatus 20 to switch the connection preferentially to the specific macro cell base station (which is assumed to be the macro cell base station 30-3), the macro cell base station 30-1 (or a specified server on the core network side) causes the specific priority information indicating that the connection should be switched preferentially to the macro cell base station 30-3 (that is, information indicating that the macro cell base station 30-3 is a prioritized switching destination) to be included in the connection switching request (step ST25).

When this specific priority information is included in the received connection switching request, the relay apparatus 20 permits switching of the connection to the macro cell base station 30-3 corresponding to the specific priority information. As a result, the connection is established between the relay node 22 and the macro cell base station 30-3 and the backhaul radio communication (BH) is executed (ST26).

Therefore, according to the second operation, while the number of times the handover may frequently occur between the macro cell base stations is suppressed, switching of the connection to the macro cell base station designated by the priority information can be executed when the special priority information is included. Accordingly, forced handover is enabled.

### (Third Operation)

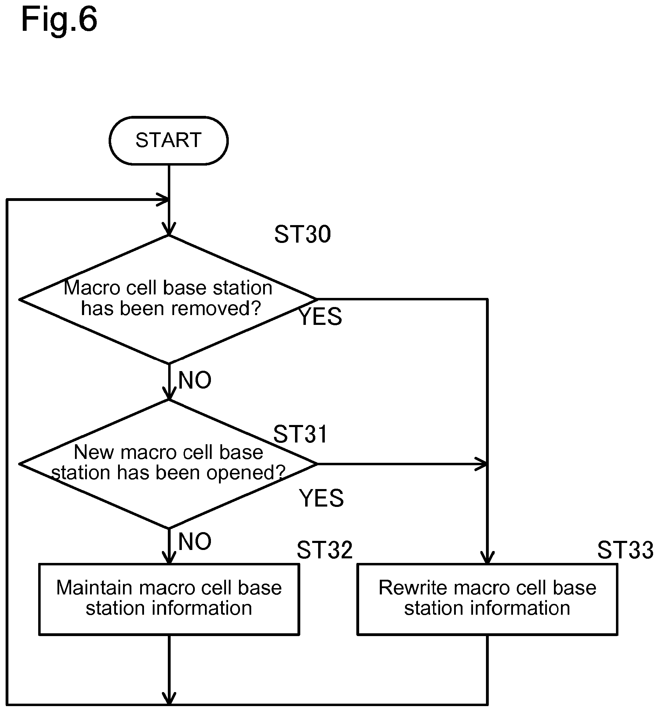

Next, the third operation of the mobile communications system 100 according to this embodiment will be explained with reference to Fig. 6. Fig. 6 is a flowchart for explaining this third operation.

This third operation is an operation executed when, for example, a macro cell base station to be removed is 30-1 and a macro cell base station to be newly installed in the vicinity is 30-2.

Regarding this third operation, the mobile communications system 100 according to this embodiment is set so that macro cell base station information about a macro cell base station to be connected first can be changed in preparation for a case where the macro cell base station 30-1 connected first is removed or a new macro cell base station 30-2 is installed in the vicinity.

Specifically speaking, whether the existing macro cell base station 30-1 is removed or not is judged regularly (step ST30) as illustrated in Fig. 6. When the existing macro cell base station 30-1 is removed (ST30: YES), the macro cell base station information is rewritten to reflect the removal of the macro cell base station 30-1 (step ST33).

On the other hand, when there is no change in the existing macro cell base station 30-1 (step ST30: NO), whether the new macro cell base station 30-2 is opened or not is further judged (step ST31). Then, when the macro cell base station 30-2 is newly installed (step ST31: YES), the macro cell base station information is rewritten so that the macro cell base station to be connected first is changed to the macro cell base station 30-2 (step ST33).

On the other hand, when the macro cell base station 30-2 is not newly installed (step ST31: NO), the existing macro cell base station information is maintained (step ST32).

With the mobile communications system 100 according to this third operation, the macro cell base station information about the macro cell base station to be connected first is set so that the information can be changed. Specifically speaking, the information about the macro cell base station to be connected is rewritten only when the macro cell base station 30-1 is removed or the new macro cell base station 30-2 is installed in the vicinity. Therefore, according to this third operation, while the frequency of the handover which may occur between the macro cell base stations is suppressed, it is possible to prepare for the removal or new installation of a macro cell base station which may occur as the need arises.

### [Other Embodiments]

The present invention has been described by referring to the embodiments as described above; however, it should not be understood that the descriptions and diagrams which constitute part of this disclosure limit this invention. This disclosure should make various substitute embodiments, examples, and operation technologies apparent to those skilled in the art.

For example, in the above-mentioned embodiments, the integrated-type relay apparatus 20 in which the relay node 22 and the access node 24 are integrated with each other is described; however, the relay apparatus 20 may be a separated-type base station in which the relay node 24 is separated from the access node 22. In a case of the separated-type base station, a plurality of access nodes may sometimes be provided for one relay node.

### REFERENCE SIGNS LIST

- 10: terminal device
- 20: relay apparatus
- 22: relay node
- 24: access node
- 30, 30-1, 30-2, 30-3: macro cell base stations
- 40: first core network
- 50: femto core network
- 60: second core network
- 70: IP multimedia subsystem IMS
- 100: mobile communications system

## Claims

1. A relay apparatus (20) for relaying communication between a terminal device (10) and a macro cell base station,
wherein the relay apparatus (20) is configured to establish a connection to a first macro cell base station (30-1) on basis of connection point identification information for identifying the first macro cell base station (30-1) which is a connection point;
**characterized in that** when the relay apparatus (20) receives, from the first macro cell base station (30-1), a connection switching request to switch the connection from the first macro cell base station (30-1) to another macro cell base station (30-2, 30-3), the relay apparatus (20) is configured to ignore the connection switching request; and
wherein when specific priority information is included in the received connection switching request, the relay apparatus is configured to switch the connection to the another macro cell base station (30-3) corresponding to the specific priority information; and
wherein the specific priority information designates a forced handover to the another macro cell base station.

2. A mobile communications system for relaying communication between a macro cell base station and a terminal device (10),
the mobile communications system comprising a relay apparatus (20) interposed between the terminal device (10) and the macro cell base station,
wherein the relay apparatus (20) is configured to establish a connection to a first macro cell base station (30-1) on basis of connection point identification information for identifying the specific macro cell base station (30-1) which is a connection point;
**characterized in that** when the relay apparatus (20) receives a connection switching request, from the first macro cell base station (30-1), to switch the connection from the specific macro cell base station (30-1) to another macro cell base station (30-2;30-3), the relay apparatus (20) is configured to ignore the connection switching request; and
wherein when specific priority information is included in the received connection switching request, the relay apparatus is configured to switch the connection to the another macro cell base station (30-3) corresponding to the specific priority information; and
wherein the specific priority information designates a forced handover to the another macro cell base station.

3. A relay method performed by a relay apparatus for relaying communication between a terminal device (10) and a macro cell base station,
the relay method comprising:
a step of establishing a connection to a first macro cell base station (30-1) on basis of connection point identification information for identifying the first macro cell base station (30-1) which is a connection point;
**characterized by** a step, when receiving a connection switching request from the first macro cell base station (30-1) to switch the connection from the first macro cell base station (30-1) to another macro cell base station (30-2, 30-3), of ignoring the connection switching request,
and when specific priority information is included in the received connection switching request, of switching the connection to the another macro cell base station (30-3) corresponding to the specific priority information; and
wherein the specific priority information designates a forced handover to the another macro cell base station.

## Patentansprüche

1. Relaisvorrichtung (20) zum Vermitteln von Kommunikation zwischen einem Endgerät (10) und einer Makrozellenbasisstation,
wobei die Relaisvorrichtung (20) dazu ausgelegt ist, eine Verbindung zu einer ersten Makrozellenbasisstation (30-1) auf Grundlage von Verbindungspunktidentifikationsinformationen herzustellen, um die erste Makrozellenbasisstation (30-1) zu identifizieren, die ein Verbindungspunkt ist;
**dadurch gekennzeichnet, dass**, wenn die Relaisvorrichtung (20) von der ersten Makrozellenbasisstation (30-1) eine Verbindungsumschaltungsanforderung empfängt, die Verbindung von der ersten Makrozellenbasisstation (30-1) zu einer anderen Makrozellenbasisstation (30-2, 30-3) umzuschalten, die Relaisvorrichtung (20) dazu ausgelegt ist, die Verbindungsumschaltungsanforderung zu ignorieren; und
wobei, wenn spezifische Prioritätsinformationen in der empfangenen Verbindungsumschaltungsanforderung enthalten sind, die Relaisvorrichtung dazu ausgelegt ist, die Verbindung entsprechend den spezifischen Prioritätsinformationen zu der anderen Makrozellenbasisstation (30-3) umzuschalten; und
wobei die spezifischen Prioritätsinformationen eine Zwangsübergabe zu der anderen Makrozellenbasisstation bestimmen.

2. Mobiles Kommunikationssystem zum Vermitteln von Kommunikation zwischen einer Makrozellenbasisstation und einem Endgerät (10),
wobei das mobile Kommunikationssystem eine Relaisvorrichtung (20) umfasst, die zwischen dem Endgerät (10) und der Makrozellenbasisstation zwischengeschaltet ist,
wobei die Relaisvorrichtung (20) dazu ausgelegt ist, eine Verbindung zu einer ersten Makrozellenbasisstation (30-1) auf Grundlage von Verbindungspunktidentifikationsinformationen herzustellen, um die spezifische Makrozellenbasisstation (30-1) zu identifizieren, die ein Verbindungspunkt ist;
**dadurch gekennzeichnet, dass**, wenn die Relaisvorrichtung (20) von der ersten Makrozellenbasisstation (30-1) eine Verbindungsumschaltungsanforderung empfängt, die Verbindung von der spezifischen Makrozellenbasisstation (30-1) zu einer anderen Makrozellenbasisstation (30-2, 30-3) umzuschalten, die Relaisvorrichtung (20) dazu ausgelegt ist, die Verbindungsumschaltungsanforderung zu ignorieren; und
wobei, wenn spezifische Prioritätsinformationen in der empfangenen Verbindungsumschaltungsanforderung enthalten sind, die Relaisvorrichtung dazu ausgelegt ist, die Verbindung entsprechend den spezifischen Prioritätsinformationen zu der anderen Makrozellenbasisstation (30-3) umzuschalten; und
wobei die spezifischen Prioritätsinformationen eine Zwangsübergabe zu der anderen Makrozellenbasisstation bestimmen.

3. Relaisverfahren, das durch eine Relaisvorrichtung zum Vermitteln von Kommunikation zwischen einem Endgerät (10) und einer Makrozellenbasisstation durchgeführt wird,
wobei das Relaisverfahren umfasst:
einen Schritt, eine Verbindung zu einer ersten Makrozellenbasisstation (30-1) auf Grundlage von Verbindungspunktidentifikationsinformationen herzustellen, um die erste Makrozellenbasisstation (30-1) zu identifizieren, die ein Verbindungspunkt ist;
**gekennzeichnet durch** einen Schritt, die Verbindungsumschaltungsanforderung zu ignorieren, wenn von der ersten Makrozellenbasisstation (30-1) eine Verbindungsumschaltungsanforderung empfangen wird, die Verbindung von der ersten Makrozellenbasisstation (30-1) zu einer anderen Makrozellenbasisstation (30-2, 30-3) umzuschalten,
und wenn spezifische Prioritätsinformationen in der empfangenen Verbindungsumschaltungsanforderung enthalten sind, die Verbindung entsprechend den spezifischen Prioritätsinformationen zu der anderen Makrozellenbasisstation (30-3) umzuschalten; und
wobei die spezifischen Prioritätsinformationen eine Zwangsübergabe zu der anderen Makrozellenbasisstation bestimmen.

## Revendications

1. Appareil relais (20) destiné à relayer une communication entre un dispositif terminal (10) et une station de base de macrocellule,
sachant que l'appareil relais (20) est configuré pour établir une connexion à une première station de base de macrocellule (30-1) sur la base d'informations d'identification de point de connexion destinées à identifier la première station de base de macrocellule (30-1) qui est un point de connexion ;
**caractérisé en ce que** lorsque l'appareil relais (20) reçoit, depuis la première station de base de macrocellule (30-1), une demande de commutation de connexion pour commuter la connexion depuis la première station de base de macrocellule (30-1) vers une autre station de base de macrocellule (30-2, 30-3), l'appareil relais (20) est configuré pour ignorer la demande de commutation de connexion ; et
sachant que lorsque des informations de priorité spécifiques sont incluses dans la demande de commutation de connexion reçue, l'appareil relais est configuré pour commuter la connexion vers l'autre station de base de macrocellule (30-3) correspondant aux informations de priorité spécifiques ; et
sachant que les informations de priorité spécifiques désignent un transfert forcé vers l'autre station de base de macrocellule.

2. Système de communication mobile destiné à relayer une communication entre une station de base de macrocellule et un dispositif terminal (10),
le système de communication mobile comprenant un appareil relais (20) interposé entre le dispositif terminal (10) et la station de base de macrocellule,
sachant que l'appareil relais (20) est configuré pour établir une connexion à une première station de base de macrocellule (30-1) sur la base d'informations d'identification de point de connexion destinées à identifier la station de base de macrocellule (30-1) spécifique qui est un point de connexion ;
**caractérisé en ce que** lorsque l'appareil relais (20) reçoit une demande de commutation de connexion, depuis la première station de base de macrocellule (30-1), pour commuter la connexion depuis la station de base de macrocellule (30-1) spécifique vers une autre station de base de macrocellule (30-2 ; 30-3), l'appareil relais (20) est configuré pour ignorer la demande de commutation de connexion ; et
sachant que lorsque des informations de priorité spécifiques sont incluses dans la demande de commutation de connexion reçue, l'appareil relais est configuré pour commuter la connexion vers l'autre station de base de macrocellule (30-3) correspondant aux informations de priorité spécifiques ; et
sachant que les informations de priorité spécifiques désignent un transfert forcé vers l'autre station de base de macrocellule.

3. Procédé de relais effectué par un appareil relais destiné à relayer une communication entre un dispositif terminal (10) et une station de base de macrocellule,
le procédé relais comprenant :
une étape consistant à établir une connexion à une première station de base de macrocellule (30-1) sur la base d'informations d'identification de point de connexion destinées à identifier la première station de base de macrocellule (30-1) qui est un point de connexion ;
**caractérisé par** une étape consistant, lors de la réception d'une demande de commutation de connexion depuis la première station de base de macrocellule (30-1) pour commuter la connexion depuis la première station de base de macrocellule (30-1) vers une autre station de base de macrocellule (30-2, 30-3), à ignorer la demande de commutation de connexion,
et lorsque des informations de priorité spécifiques sont incluses dans la demande de commutation de connexion reçue, à commuter la connexion vers l'autre station de base de macrocellule (30-3) correspondant aux informations de priorité spécifiques ; et
sachant que les informations de priorité spécifiques désignent un transfert forcé vers l'autre station de base de macrocellule.
